# EUROPEAN PATENT SPECIFICATION

(11) **EP 0 665 677 B1**
(45) Date of publication and mention of the grant of the patent: **19.12.2001**
(21) Application number: 95300495.9
(22) Date of filing: 26.01.1995
(51) Int. Cl.: H04N 1/60, H04N 1/46

(54) **Printing system and method**
Drucksystem und -methode
Système et procédé d'impression

(30) Priority: 27.01.1994 US 187933
(43) Date of publication of application: 02.08.1995
(73) Proprietor: Hewlett-Packard Company, A Delaware Corporation, Palo Alto, CA 94304 (US)
(72) Inventor: Winter, Kirt Alan, Escondido, CA 92027 (US); Smith, Thomas G., San Diego, CA 92128 (US)
(74) Representative: Jehan, Robert

(56) References cited:
- EP-A- 0 464 650
- GB-A- 2 117 208
- GB-A- 2 133 657
- GB-A- 2 148 655
- GB-A- 2 148 664
- US-A- 5 018 024
- IEEE TRANSACTIONS ON COMMUNICATIONS, vol. COM-29, no. 12, December 1981 NEW YORK US, pages 1898-1925, J. C. STOFFEL ET AL. 'A Survey of Electronic Techniques for Pictorial Image Reproduction'

## Description

This invention relates generally to colour printing, and more specifically to printing different types of colour objects in the same printout.

The following related applications are assigned to the assignee of the present application: EP-A-0,665,676; EP-A-0,665,675; EP-A-0,665,674; EP-A-0,665,678, EP-A-0,665,679, EP-A-0,624,972; EP-A-0,629,079; and EP-A-0,569,206.

The use of color monitors for computers has accelerated the need for color printers which can produce a satisfactory printout of what is displayed on the screen. Part of the problem arises from the subjective nature of color. Color is a sensation produced by the combined effects of light, objects and human vision. A particular color or combination of colors may be appealing to one person while at the same time being offensive to another.

Another part of the problem arises from the different color technologies used in computer monitors and color printers. For example, computer monitors are based on a color gamut of red, green and blue pixels (RGB) while color printers such as inkjet printers are typically based on a color gamut of cyan, magenta, yellow and black (CMYK). The RGB color components of computer monitors are combined together in an "additive" way by mixing red, green and blue light rays to form a first variety of different colors, while the CMYK components of color inks are applied to media in different combinations in a "subtractive" way to form a second variety of different colors. A number of different color management techniques have been used on order to provide some form of matching between the colors viewed on a computer monitor and the colors printed by a specific printer using a given ink formula on a particular type of media. Such color management techniques have also employed different types of halftoning in order to improve the color output of printers.

Desktop publishing software programs have created additional problems by allowing different types of objects to be combined together into a composite document, such as photographic images, business graphics (e.g., charts), and scalable text in both color and black. By skewing the printer color output to ensure satisfactory color printing of photographic images, the business graphics in the same document often appear washed out and lose their impact. By skewing the printer color output to ensure satisfactory color printing of saturated vivid colors for business graphics, the photographic image in the same document loses its lifelike appearance.

Some of the aforementioned color printing problems have been partially solved by providing manually controlled printer settings to get the best results available. In addition, sophisticated users who demand exact color matching between screen and printout have obtained some solutions through color management software incorporated in the computer operating system as well as color management software incorporated into third party software applications. Also, some color matching technology has been incorporated into printer drivers which provide the translation interface between a particular computer and/or software application running in the computer and a color printer which acts as a hardcopy output device.

EP-A-0,464,650 discloses a system in which a halftone image is formed from a contone image with one of a hardware dot generator and a software dot generator. Halftone dots in simpler shapes used in usual reproduction or printing are formed with the hardware dot generator for high-speed dot generation. Halftone dots in special shapes or of special conditions are formed with the software dot generator for flexible dot generation. A dot shape, a screen ruling, and a screen angle are input as halftone dot information. When the halftone dot information corresponds to a basic pattern stored in a screen pattern memory in the hardware dot generator, the hardware dot generator is activated to produce binary halftone-dot image data. When the halftone dot information corresponds to a basic pattern stored in a memory in the software dot generator, the software dot generator is activated to produce binary halftone-dot image data according to a dot generation program.

The present invention seeks to provide an improved printing system.

According to an aspect of the present invention, there is provided a method of controlling the quality of printing as specified in claim 1.

According to another aspect of the present invention, there is provided a printing system as specified in claim 7.

The preferred method provides alternative halftone techniques used for the same types of objects to be printed, wherein different print quality modes automatically invoke different print rendering options for a particular object to be printed. When implemented in a color printer system, a printer control automatically invokes a halftone technique such as error diffusion for photo images whenever a high quality print mode is designated, and automatically invokes a second halftone technique such as a dither whenever other print modes such as normal or fast is designated.

Preferably, for automatic interactive use by a human operator, said designation-developing step comprises receiving from such human operator a manually entered designation of printing mode for at least said particular given object of said particular given type; such human operator manually enters designation of said first or second printing mode, respectively, for at least said particular given object of said particular given type; and said automatically-invoking step, and said automatically-rendering-and-printing step, proceed in accordance with said manually entered designation, using said manually designated first or second print mode and corresponding first or second automatically-invoked rendering option, respectively.

Advantageously, said designation-developing step comprises developing a designation of a print mode for use in printing such entire composite document; said automatically-selecting step comprises automatically selecting, for use in printing such entire composite document, said print mode whose designation has been developed in the designation-developing step; and said automatically-rendering-and-printing step comprises automatically rendering and printing such entire composite document using said designated print mode, including rendering and printing said one particular given object of said particular given one type using said designated print mode and using the corresponding automatically-invoked rendering option.

For automatic interactive use by a human operator said designation-developing step preferably comprises receiving from such human operator a manually entered designation of a printing mode for such entire composite document; and such human operator manually enters designation of a printing mode for such entire composite document; and said automatically-rendering-and-printing step comprises automatically rendering and printing said one particular given object of said particular given one type using said operator-manually-designated print mode, and using the corresponding automatically-invoked rendering option.

In a preferred method, said first-option-invoking step comprises automatically invoking the first print-rendering option if said first print mode is designated in the designation-developing step; and said second-option-alternatively-invoking step comprises automatically invoking the second print-rendering option if said second print mode is designated in the designation-developing step.

Preferably, said first print mode is a high-quality print mode, and said second print mode has a higher throughput than said first print mode.

The invoking step and said alternatively-invoking step may automatically occur when a photo image object is to be printed.

There may be provided the step of automatically invoking another print-rendering option if an object different from said one type of object is to be printed.

The automatically-invoking step may invoke one type of halftoning technique; and said alternatively-invoking step may invoke a different type of halftoning technique.

The invoking step or said alternatively-invoking step preferably occurs automatically whenever said first or second print mode is designated, respectively.

The invoking step may invoke an error-diffusion halftoning technique; and said alternatively-invoking step may invoke a dither halftoning technique.

The providing step includes providing a color printing system having different print modes.

Advantageously, said providing step may include providing a color inkjet printing system.

In an embodiment, said alternatively-invoking step includes invoking a second print-rendering option for said one type of object to be printed in a second as well as a third print mode.

As will be apparent, it is possible to provide a plurality of different selectable print modes. It is also possible to distinguish a plurality of different object types any of which may be in such composite document. This step may include distinguishing at least one particular given object of a particular given one type.

In addition the method of preferred embodiments may include the steps of developing a designation of one of a plurality of print modes, to be used in printing; and, in response to that designation-developing step, automatically selecting the designated print mode for use in printing.

Preferred embodiments of a printing system include means for invoking different print-rendering options for an object of at least one certain object type - whenever one or the other of the or least two different print modes, respectively, is selected.

It is thus possible to provide a system which allows operators to simply indicate whether they want relatively high quality or relatively high speed - and yet obtain photo-printout results which are likely to be in accordance with the choices which sophisticated and concerned users would make in all but a tiny fraction of printing projects.

This is an important benefit since the character and significance of the concept of halftoning, as well as the making of a choice between halftoning modes, is - for nearly all users - an exceedingly difficult, remote and indeed abstract matter. Sparing the user (even a somewhat sophisticated user) this entire study thus represents a valuable feature.

It is preferred that the designation-developing step include receiving from the human operator a manually entered designation of printing mode for at least the particular given object of the particular given type. Thus the operator can manually enter designation of the first or second printing mode, respectively, for at least the particular given object of given type; and the automatically-invoking step step, and the automatically-rendering-and-printing step, and proceed in accordance with that designation - using the manually designated first or second print mode and corresponding first or second automatically-invoked rendering option, respectively.

Preferably in the designation-developing step a designation of print mode is developed for printing the entire composite document; the automatically-selecting step then includes automatically selecting, for use in printing the entire composite document, the print mode whose designation has been developed in the designation-developing step. The automatically-rendering-and-printing step then includes automatically rendering and printing the entire composite document using the designated print mode -- including rendering and printing the one particular given object of given type using the designated print mode and the corresponding automatically-invoked rendering option.

In this latter case again it is preferred that the designation applicable to the entire document be manually entered by a human operator -- as outlined above -- operatively interacting with the computer system.

In the method context it is also preferred that the first-option-invoking step include automatically invoking the first print-rendering option if the first print mode is designated in the designation-developing step. It is further preferred that the second-option-alternatively-invoking step include automatically invoking the second print-rendering option if the second print mode is designated in the designation-developing step.

We prefer that the first print mode be a high-quality print mode, and the second print mode have a higher throughput than the first print. We particularly prefer that the invoking and alternatively-invoking steps automatically occur when a photo image (or equivalent) object is to be printed; it is preferred that the system automatically also invoke another print-rendering option if an object different from the one type of object is to be printed.

When the first print mode is a high-quality mode and the second has a higher throughput, we also prefer that the invoking step invoke an error-diffusion halftoning technique and the alternatively-invoking step invoke a dither halftoning technique.

In the printing-system (which is to say, apparatus) contexts of the invention, like preferences apply to the color-management means etc. as will be clear to those skilled in the art.

An embodiment of the present invention is described below, by way of example only, with reference to the accompanying drawings, in which:
Fig. 1 is a block diagram showing a preferred embodiment of a computer system;
Figs. 2A, 2B, 3A and 3B are a flow chart showing how automatic and manual options in the system of Fig. 1 are used to produce a color printout of a composite document;
Figs. 4 and 5 show a sequence of interactive computer screens generated during the process of Figs. 2A, 2B, 3A and 3B;
FIG. 6 is a schematic block diagram for producing color photo printouts in accordance with the preferred embodiment of FIG. 1;
FIG. 7 is a halftone flow chart for the preferred embodiment of FIG. 1;
FIG. 8 is a color control flow chart for the preferred embodiment of FIG. 1;
FIG. 9 is a functional block diagram showing the relationship of color control and halftoning in processing and printing photographic images;

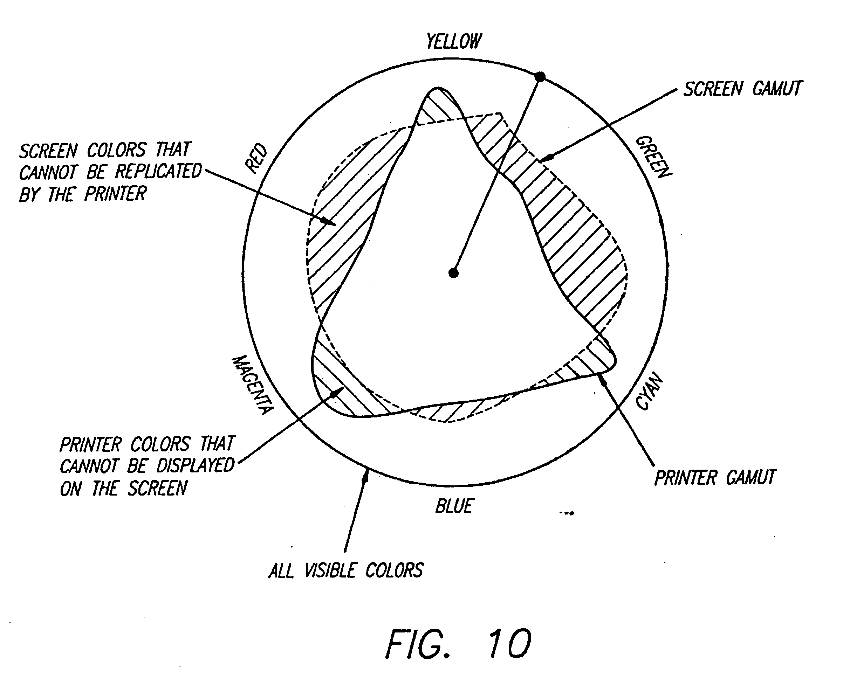

FIG. 10 is a schematic diagram showing the different color gamuts of visible light, a computer screen, and a printer which are used in the color control flow chart of FIG. 8; and
FIGS. 11 and 12 show a typical color inkjet printer.

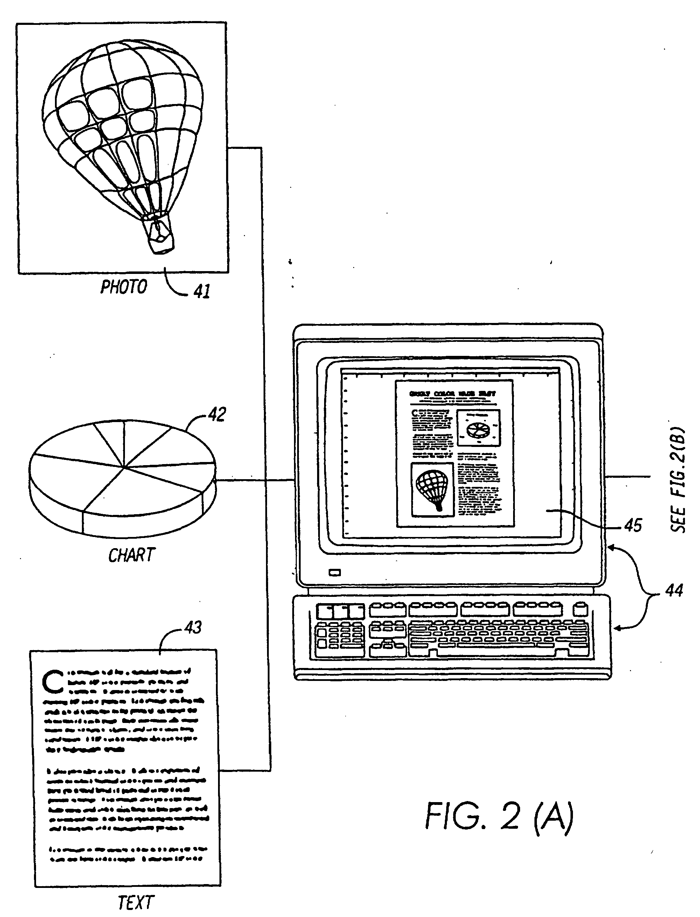

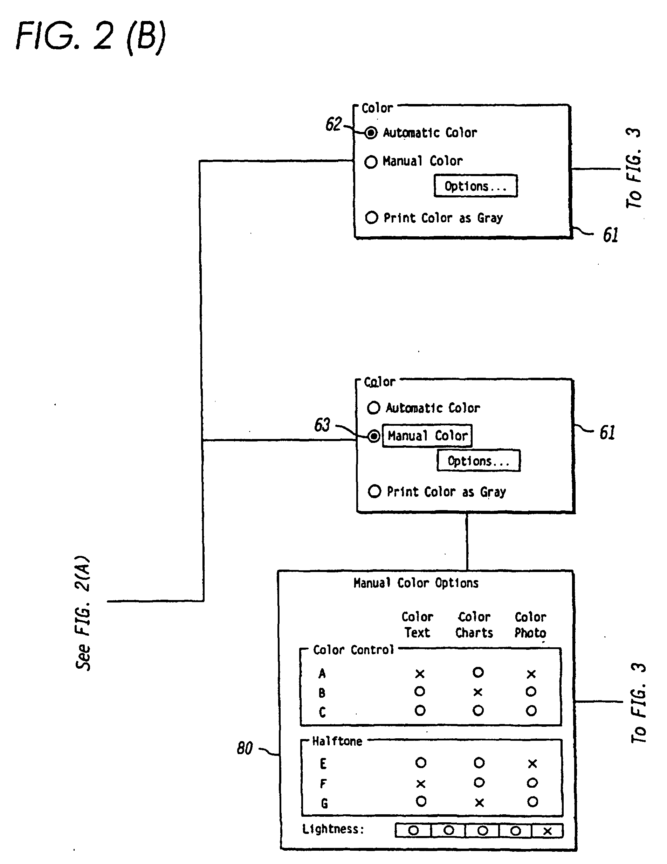

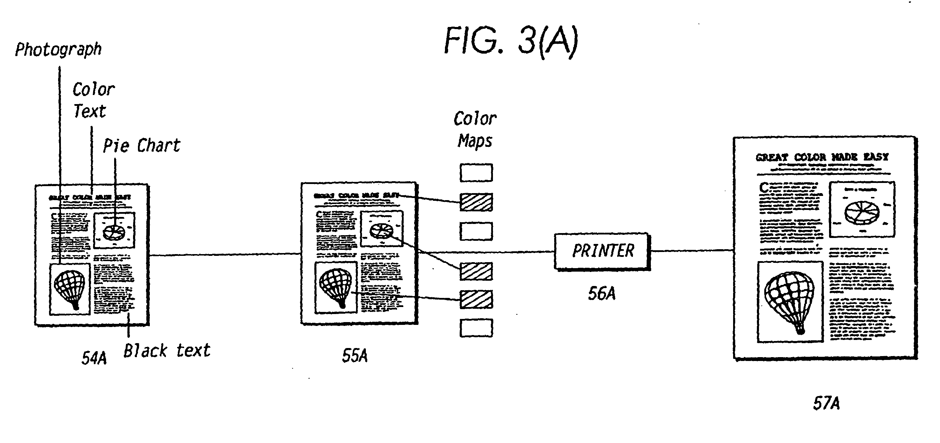

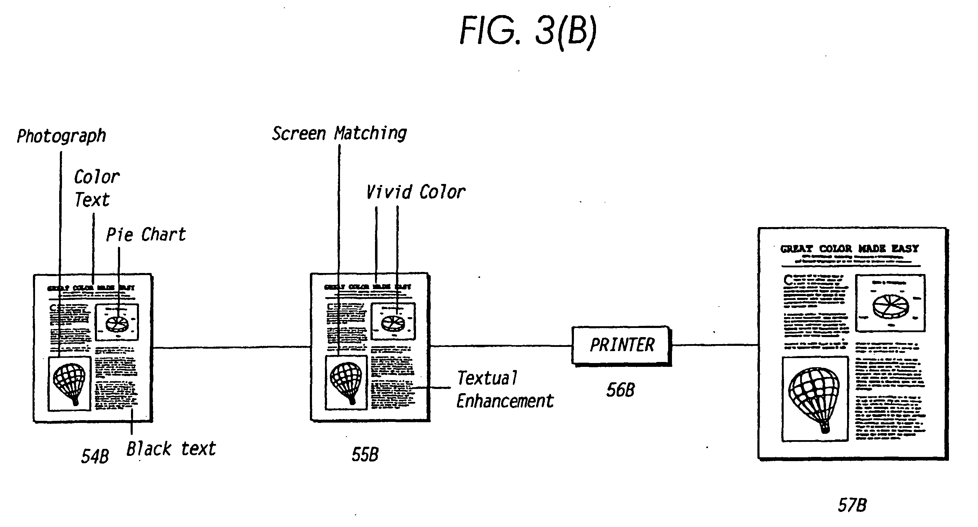

Generally speaking, the described embodiment can provide improved print quality for composite documents which have different types of objects to be printed in the same document and in many instances on the same page. In an exemplary printer system as illustrated in the drawings, one or more different types of color objects 41-43 (Fig. 2) are identified and flagged 54 (Fig. 3); a preferred rendering option, such as halftoning, and/or color matching is selected for each one of such different color-object types; and then the document is printed in accordance with the rendering and color-control options selected for each of such different color-object types.

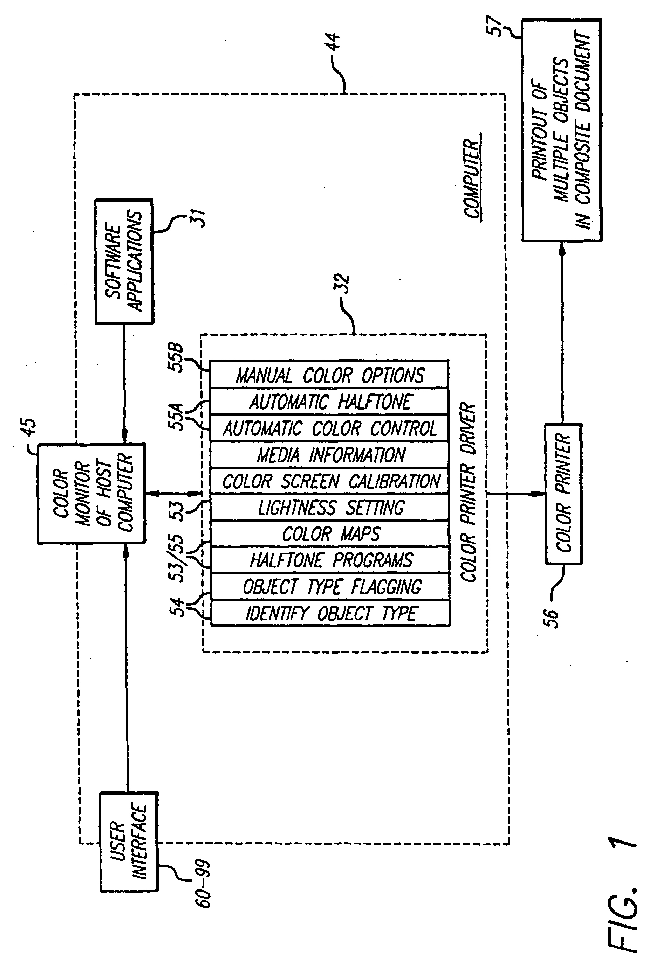

The color inkjet system of the preferred embodiment includes a printer 56 (Figs. 1 and 3) coupled through a printer driver 32 to applications (or operating-system) software 31 running in a host computer 44. A set of default halftoning techniques and default color-matching maps is incorporated in the printer system for automatic invocation whenever objects of respective particular color-object types are to be printed in the absence of user selections.

It is possible to provide either automatic or manual implementation of various color-control and rendering options. For example, in the color inkjet system shown an interactive user interface allows a choice between one-"button" 62 automatic control 53A of color output or multibutton control 63-99 of color output, with both automatic and manual options providing independent control for color halftoning 90 and for color correction 81 based on the types of objects to be printed. The preferred form allows separate print-control options for text 43 , graphics 42 and photo (or photograph-like) images 41

Different print-quality modes 65 in the printer invoke 11, 12 different print-rendering options 21, 22 for a particular object to be printed. In the exemplary embodiment, a printer control 65 automatically invokes an error-diffusion halftoning technique 22 for photo images 41 whenever a high-quality mode 66 is designated, and automatically invokes a dither halftoning technique 21 for photo images 41 whenever a normal 67 or fast 68 print mode is designated.

It is important to note that the location of the color-management functionality is somewhat flexible within the printer system. Such functionality in the presently preferred version of the invention is primarily in the printer driver 32, but it could be implemented in the printer driver and/or printer 56 firmware -- and/or even in the printer 56 hardware (e. g., custom integrated circuits, etc.).

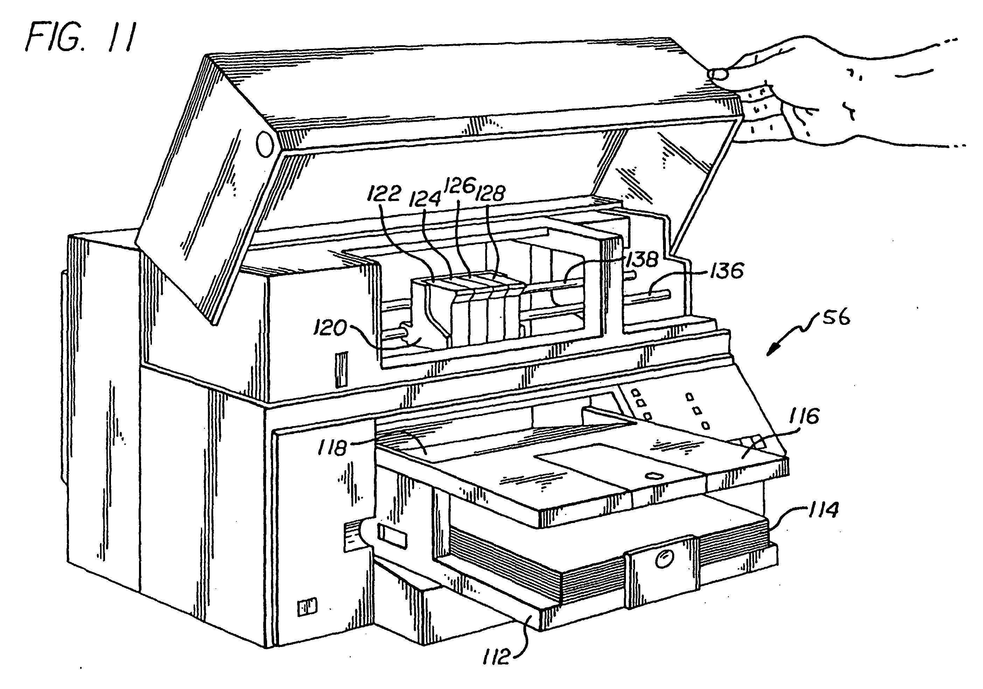

The preferred embodiment is incorporated in an inkjet printer of the type shown in Fig. 11. In particular, inkjet printer 110 includes an input tray 112 containing sheets of a printing medium 114, which pass through a print zone and are fed past an exit 118 into an output tray 116.

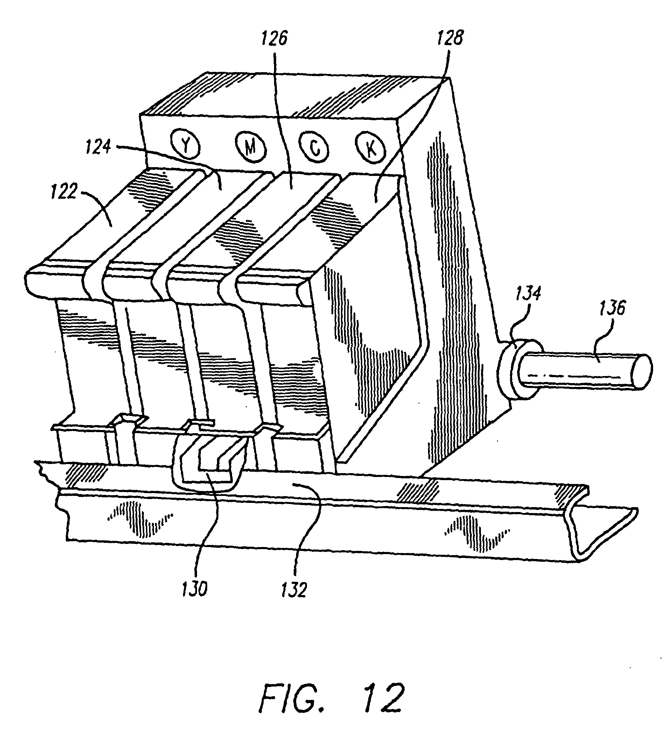

As seen in Figs. 11 and 12, a movable carriage 120 holds print cartridges 122, 124, 126 and 128 -- which in turn respectively hold yellow (Y), magenta (M), cyan (C) and black (K) inks. The front of the carriage has a support bumper 130, which rides along a guide 132; while the back of the carriage has multiple bushings such as 134, which ride along a slide rod 136.

The position of the carriage as it travels back and forth across the medium is determined from an encoder strip 138. This position information is used to selectively fire the various ink nozzles on each print cartridge at the appropriate times during each carriage scan.

Referring next to Figure 1, there is shown in schematic form an embodiment of computer system for producing and printing documents in colour. The system includes a computer 44 provided with a colour monitor 45, a user interface 60-99 of any convenient form, and a colour printer driver 32 operative to drive the printer 56 to produce documents 57 in colour. The computer 31 is driven by appropriate software applications 31.

The printer driver 32 provides in blocks 54 for the identification of the object type of document objects, that is whether they are photographs, drawings or text. Once the object type or types have been identified, the driver flags the objects with their object type at block 54.

At blocks 53/55, the printer driver 32 provides halftone programs, colour maps, setting of lightness, for colour screen calibration and necessary and desired media information. These blocks can provide either automatic colour control and automatic half tone at blocks 55A or manual colour options at lock 55B. Figures 2A, 2B, 3A and 3B show in more detail the preferred process for producing and printing composite colour documents.

Referring first to Figure 2A, the computer 44 is provided with a colour enabled software desktop publishing application which enables a user to generate pages of a document by selecting objects such as text 43 and graphics 42 and to scan into the document photographs 41 and the like. As shown in Figure 2A, the inputted objects can be laid out onto the page, specifying colours for the graphics, in this example a pie-chart 42, and also for the text 43.

As can be seen in Figure 2B, printing of the completed page provides in a menu 61, in this example, three printing options, the first being an automatic option 62 in which the system determines the optimum printer colour mixes on the basis of the object types and printer colours. The second option is a manual colour option 63 in which the user can customise the colour settings so as to achieve desired results. The third option allows the page to be printer in monochrome, using any suitable grey scale.

When the manual colour option 63 is selected, the system provides a manual option menu 80 in which parameters of each object type (text, graphics and photographs in this example) can be adjusted. The adjustable parameters in this example are colour, between three settings, halftone, also between three settings, and lightness.

Operation of the printer driver 32 in the automatic colour mode 62 and through the manual option menu 80 is shown in Figures 3A and 3B respectively. Once the page has been designed, the printer driver, at step 54A, receives the data file of the page and then determines, through object identification, the elements making up the page and tags these accordingly. In the example shown, the page includes four elements, a photograph, a pie chart a title in colour and text in black.

In the automatic mode shown in Figure 3A, at step 55A, the system assigns the correct halftoning and colour map to each colour object. These parameters will automatically adjust the printer so as to produce the optimum printed version of the generate page. The generated data page is then sent to the printer, at step 56A, for printing at step 57A. The result is a colour page equivalent to the view displayed on the monitor 45.

On the other hand, in the manual mode, the objects making up the page are tagged at step 54B in similar manner as in the automatic mode. Following this tagging, the user is given the option to customise the printer's halftoning, lightness and colour settings to change the appearance of the page. The adjusted data page is then transmitted to the printer at step 56B for printing at step 57B to produce a printed page equivalent to the adjusted page.

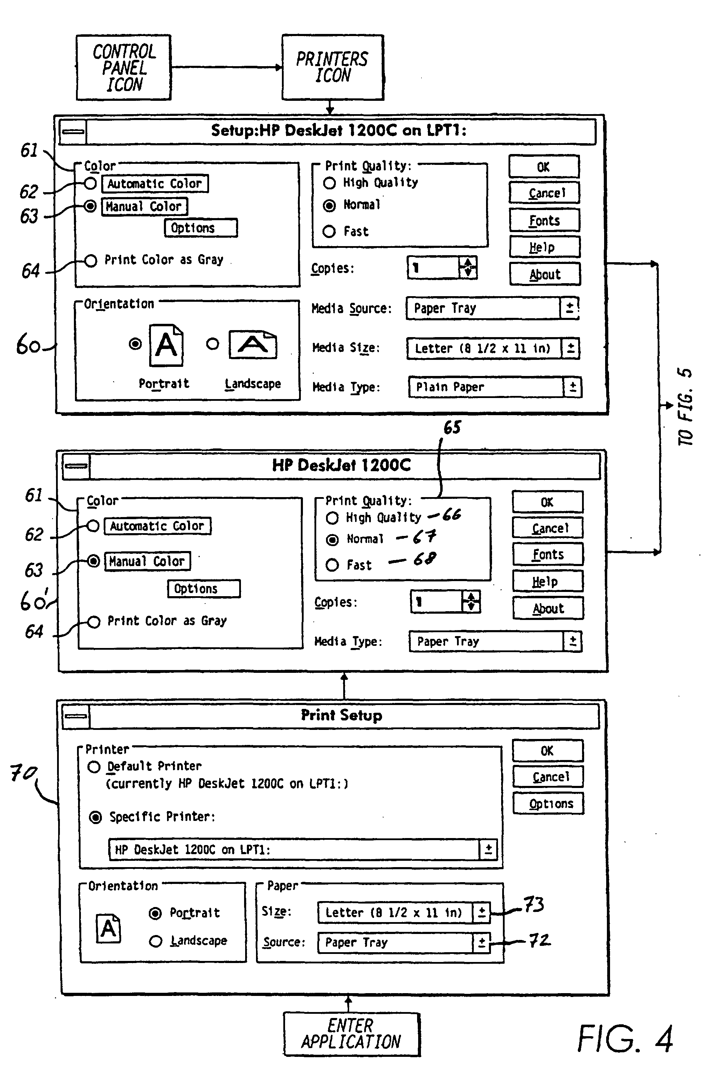

The above-described colour modes are preferably displayed in menu format. Referring to Figure 4, prior to the actual printing step 57A or 57B, the user is presented with a printing menu providing various printing options. Figure 4 shows two possible menu formats, the upper format 60 shown giving various printer set up options which are treated as default settings in a printer set up menu for the lower printing format 60'. The Print setup menu may be of the type provided in Windows 3.1 (TM) developed by Microsoft Corporation.

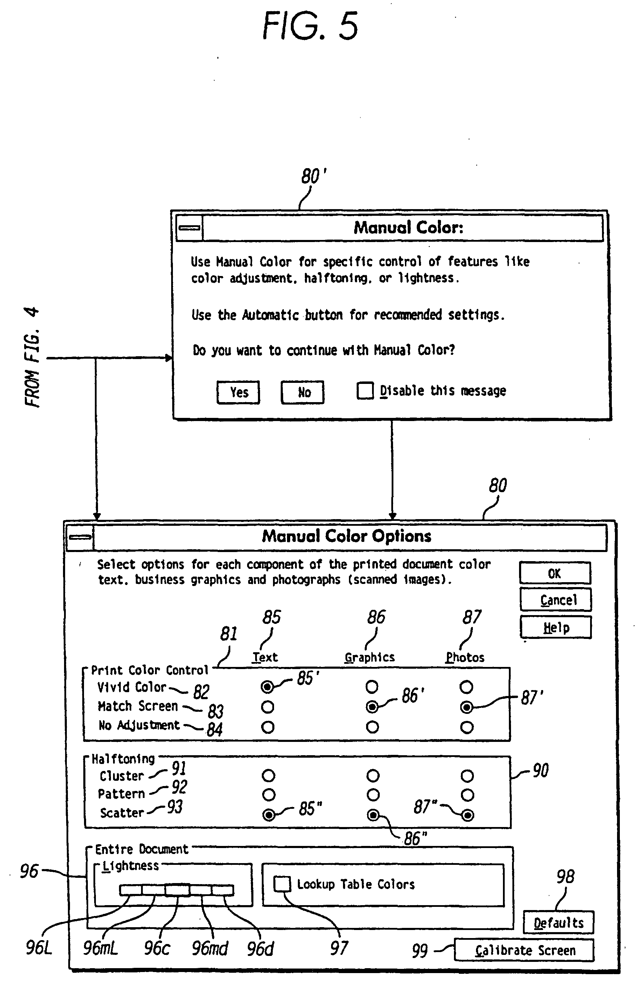

When the manual colour mode is selected, the system displays menus of the type shown in Figure 5.

The preferred embodiment makes use of and performs in the environment of well-known commercially available color-matching specifications and operating-system software whose use is very widespread. These are respectively Pantone^{R} Color and Microsoft's Windows^{R} 3.1; the following details accordingly, for definiteness, are couched in terms of these familiar modules. The role of Pantone in this environment is, in essence, as arbiter of what may be called "true" color; however, those skilled in the field will understand that even this represents simply an effort to provide a reliably expert evaluation of what is inherently subjective.

The preferred embodiment further has been embodied in color printing devices 56, 110 commercially available from the Hewlett Packard Company as its DeskJet® model 1200C and PaintJet® model XL300, in abbreviated form : DJ 1200C and PJ XL300 respectively.

Readers skilled in the art, however, will appreciate that the described embodiments are not limited to this environment and could be applied in any of a great variety of present and future color-matching/operating-system/ printer environments.

In Windows® 3.1, Microsoft developed the concept of a so-called "common print dialog" 70 (Fig. 4). This "dialog" screen is called from different points within the application or from Windows directly. When this dialog function 70 has been used, some features of the color-printing-driver 32 "Setup Dialog" screen 60 have been addressed already: these features are "Orientation" 71, "Media Size" (e. g., paper size) 73 and "Media Source" (e. g., paper source) 72.

These features therefore need not be presented to the user again in the print-driver 32 "Setup Dialog". With this in mind, the driver is best configured to display only a modified version 60' of the Setup Dialog 60 when the driver 32 is called from the common print dialog 70.

As shown in Fig. 5, the user options presented in the driver's "Manual Color Options" screen 80 are divided into two categories. The first category 81-93 contains the settings labeled "Printed Color Control" 81 and "Halftoning" 90. These options can be selected on an object-by-object 41-43 basis; the object types in this case are text 85, graphics 86 and photos -- or photo-like images -- 87.

**Table 1:**

| LIGHTNESS SLIDER settings and functions | | | | | |
|---|---|---|---|---|---|
| Color Control | γ value for indicated slider setting | | | | |
| | lightest | lighter | normal | darker | darkest |
| Accurate Match | 0.5 | 0.7 | 1.0 | 1.2 | 1.4 |
| Clear and Vibrant | 0.5 | 0.7 | 1.0 | 1.2 | 1.4 |
| No Adjustment | 0.3 | 0.4 | 0.6 | 0.8 | 1.0 |

In other words, the Printed Color Control 81 can be set for text 85 to a mode that is different from the mode or modes selected for graphics 86 and for photographic images or the like 87. The Halftoning method 90 too can be different for the three different types of objects 85-87.

The second category 96, 97 contains the "Lightness" slider 96 and the "Lookup-Table Colors" (e. g., "Pantone Colors") mode control 97. In the preferred embodiment these options can be set only on a job-by-job basis. This means that the Lightness 96 and Lookup-Table mode 97 act upon the entire job regardless of what types of objects are in each job (or on each page of the job).

The driver adjusts the incoming red, green and blue (RGB) data by applying a "gamma" (contrast function) correction to produce adjusted RGB data as indicated in Table 1.

In configuring the preferred embodiment, the color transfer functions of both the DJ 1200C and the PJ XL300 were characterized to create a lookup (e. g., Pantone® Color) table to be incorporated into the driver. When this mode is selected, the driver checks all incoming RGB values against the key values provided by the lookup table. If there is an exact match, then the driver maps (i. e., translates) the incoming RGB value into the correct (as discerned by Pantone) RGB value to send to the printer -- to produce the closest approximation of the Pantone color selected.

**Table 2:**

| PRINTED COLOR CONTROL/HALFTONING selections for TEXT and GRAPHICS | | | | |
|---|---|---|---|---|
| Halftone setting | Color-Control setting | | | key |
| | Clear and Vivid | Accurate Match | No Adjustment | |
| Scatter | HMS color map (#1) | Accurate map (#8) | RGB pass-through | color "map" |
| | HPL noise | HPL noise | HPL noise | half-toning |
| Cluster | HMS color map (#2) | Accurate map (#9) | RGB pass-through | color "map" |
| | Current Cluster dither | Current Cluster dither | Current Cluster dither | half-toning toning |
| Pattern | HMS color map (#3) | Accurate map (#10) | RGB pass-through | color "map" |
| | Current Bayer dither | Current Bayer dither | Current Bayer dither | half-toning |

Only so-called "Plain Paper" has been Pantone certified for the DJ 1200C; and "Special Paper" for the PJ XL300. In operating a system according to the preferred embodiment, if a user attempts to select the "Lookup-Table Colors" ("Pantone Colors") checkbox when the appropriate type 74/74' of medium is not selected, a warning message appears.

"Defaults" button 98 (Fig. 5) -- This control resets all the user options in this dialog to the factory-default values for the prevailing mode. These defaults 85'/86'/-87'/85"/86"/87" are shown in the "Manual Color Options Dialog" screen display 80 of Fig. 5.

"Calibrate Screen" button 99 -- This control brings up the so-called "Calibration" utility. An operator will use this when it is desired to recalibrate the mcnitor in order to assemble and store 14 new color maps (tables) for an "Accurate Screen Match" mode.

**Table 3:**

| PRINTED COLOR CONTROL/HALFTONING selections for PHOTOGRAPHIC images | | | | |
|---|---|---|---|---|
| Halftone setting | Color-Control setting | | | key |
| | Clear and Vivid | Accurate Match | No Adjustment | |
| Scatter | HMS color map (#4, 5) (#4, 5) | Accurate map (#8, 11) (#8, 11) | RGB pass-through, | color "map" |
| | HPL noise with CV or CMYK Err. Diff. | HPL noise with CV or CMYK Err. Diff. | HPL noise with CV or CMYK Err. Diff. | half-toning |
| Cluster | HMS color map (#6) | Accurate map (#9) | RGB pass-through | color "map" |
| | Current Cluster dither | Current Cluster dither | Current Cluster dither | half-toning |
| Pattern | HMS color map (#7) | Accurate map (#10) | RGB pass-through | color "map" |
| | Current Bayer dither | Current Bayer dither | Current Bayer dither | half-toning |

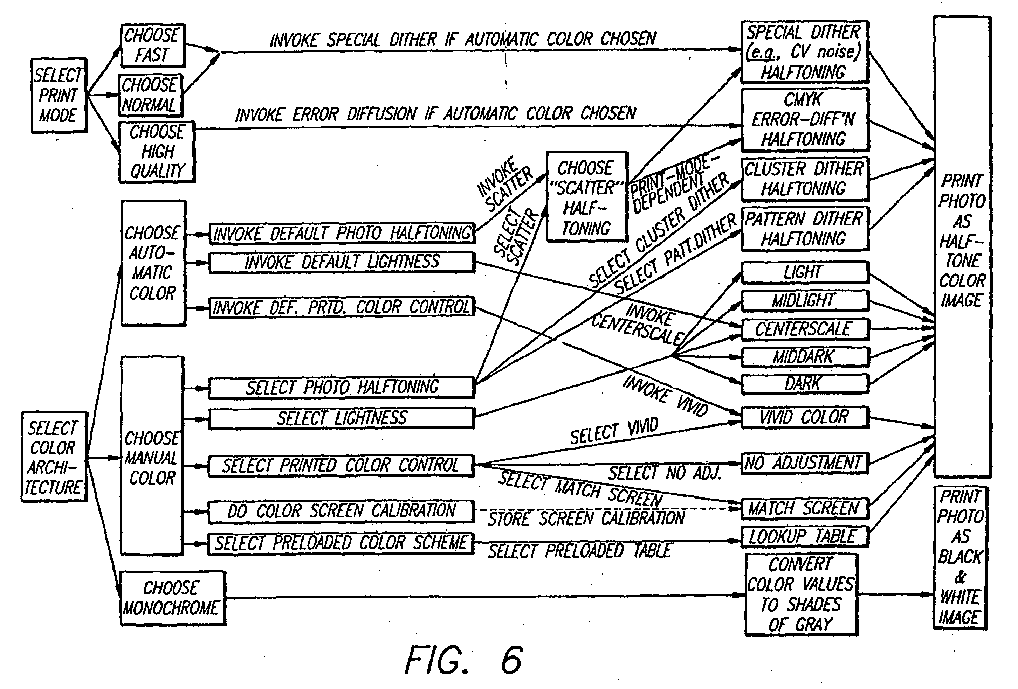

Tables 2 and 3 show the types of color matching (or "mapping" 82-84) and halftoning 21-27, 91, 92 (Figs. 6 through 9) that are implemented in the driver 32 for the various user-selectable options or settings in this user-interface dialog 80. Following are definitions of the table entries.

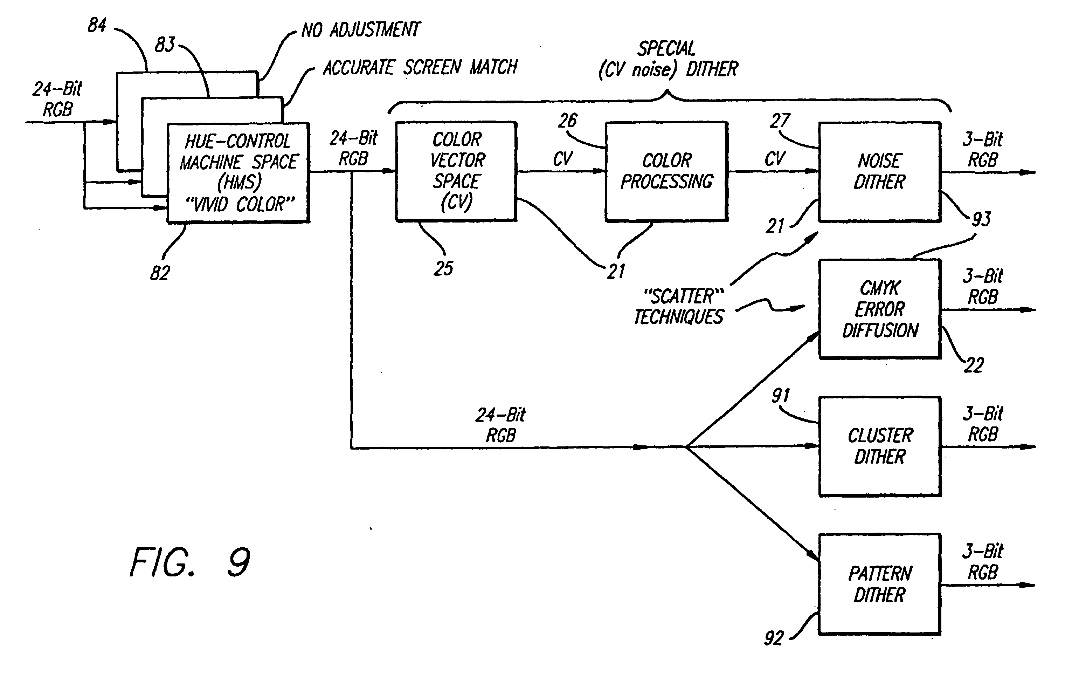

"HMS type color map" 82 (Fig. 9) -- This is a color-correction relationship used to boost the vibrancy of the hue associated with an input or given RGB value, as indicated by the designation "Vivid Color" in Figs. 6 through 9.

"Accurate color map" 83 -- This is an alternative relationship created when a user calibrates the monitor with screen calibration 99 (that is, using the "Calibration" utility 14 mentioned above) in order to get printed output 57 that matches what is on the user's screen 45. This map 83 is then called up if the user actuates 81 (Fig. 6) the "Match Screen" selection 83 of Fig. 5.

"No Adjustment" 84 -- With this setting the driver 32 does not do any processing of incoming RGB data. This is the mode an operator may use to control exactly the RGB values that are sent to the printer 56.

"HPL Noise with CV" 21 (Figs. 6, 7 and 9) -- This "Halftoning" 90 option utilizes a 128x128-byte so-called "Noise dither" matrix 27, along with conversion 25 of RGB data into "Color Vector" ("CV") data. This option provides quality closer to that of "Error Diffusion" (see below), with about the speed of normal dithering 91, 92.

This option is invoked in the "Fast" 68 or "Normal" 67 printing mode when "Scatter" halftoning is selected. "HPL Noise" halftoning 93 is disclosed in the above-mentioned copending applications Serial 57,244 and 60,285; and "HPL Noise with CV" 21 is disclosed in European patent application EP-A-0,665,678 and EP-A-0,665,674, filed concurrently with this document.

"CMYK Err Diff" 22 -- This "Halftoning" option utilizes a CMYK (cyan-magenta-yellow-black) "Error Diffusion" algorithm. This provides the highest-quality output (for photograph-like images only), but is the slowest halftoning method.

It is used when the system is set to its "High Quality" printing mode 66 and "Scatter" halftoning 93 is selected. CMYK Error Diffusion 22 is disclosed in European patent application no. EP-A-0,665,679, (N2989), filed concurrently herewith.

"Current Cluster dither" -- This is the same "Cluster dither" 91 that is in earlier DJ 1200C and PJ XL300 printers. This method is faster than Error Diffusion 22 and provides good edge definition for text and graphics.

"Current Bayer dither" - This is the same so-called "Pattern dither" 92 that is in earlier DJ 1200C and PJ XL300 printers - again, those uninfluenced by the described embodiments. This method has the same speed as Cluster dither 91 and has been preferred by some users.

The total number of maps needed is shown also in the matrices above. There will be 11 maps needed for all the combinations of color matching modes and half tone methods.

This is a significant increase in the number of maps shipped and will definitely put the space required for installation above the amount that can fit onto one disk. Therefore, the decision has been made to ship the driver on 2 disks to accomodate this.

The processing flow shown in Figure 6 for the three possible print options of automatic or manual colour or monochrome will be apparent to the skilled person without specific description of the various steps shown.

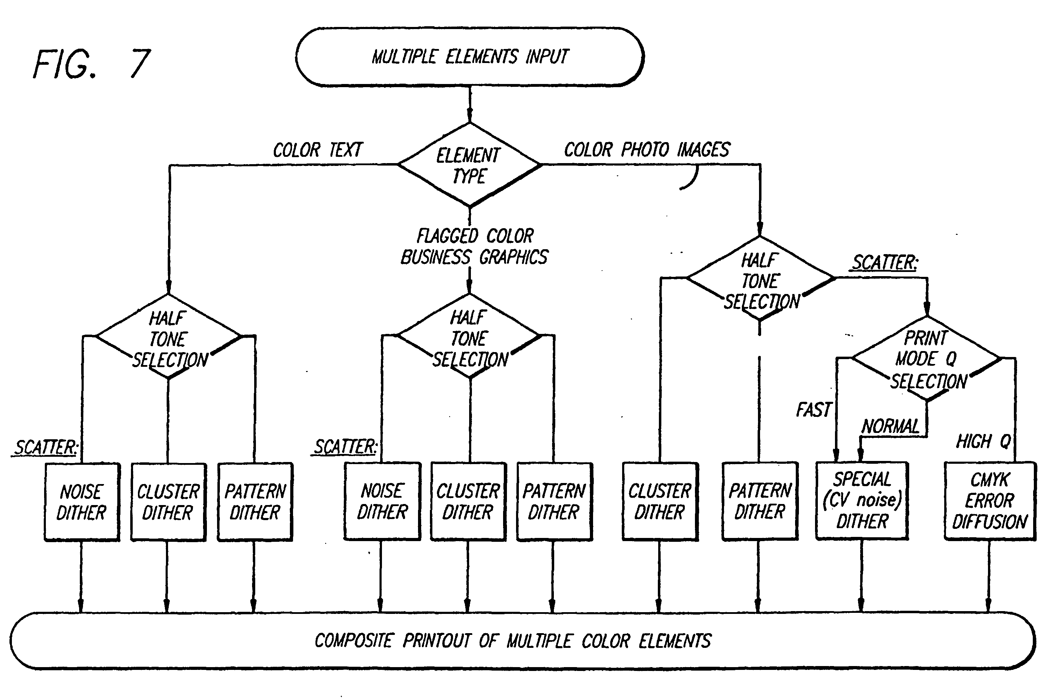

Figure 7 shows a processing flow chart for pages containing various types of object. The first step in the process is to determine the element or object type. In dependence upon the object type, processing continues along specific paths to set the halftone, noise dither, cluster dither and pattern dither appropriate for the identified object. In the case of photographs, the routine allows for the selection of three different print modes: fast, normal and high quality. The various steps in the flow chart will be apparent to the skilled person without further explanation herein.

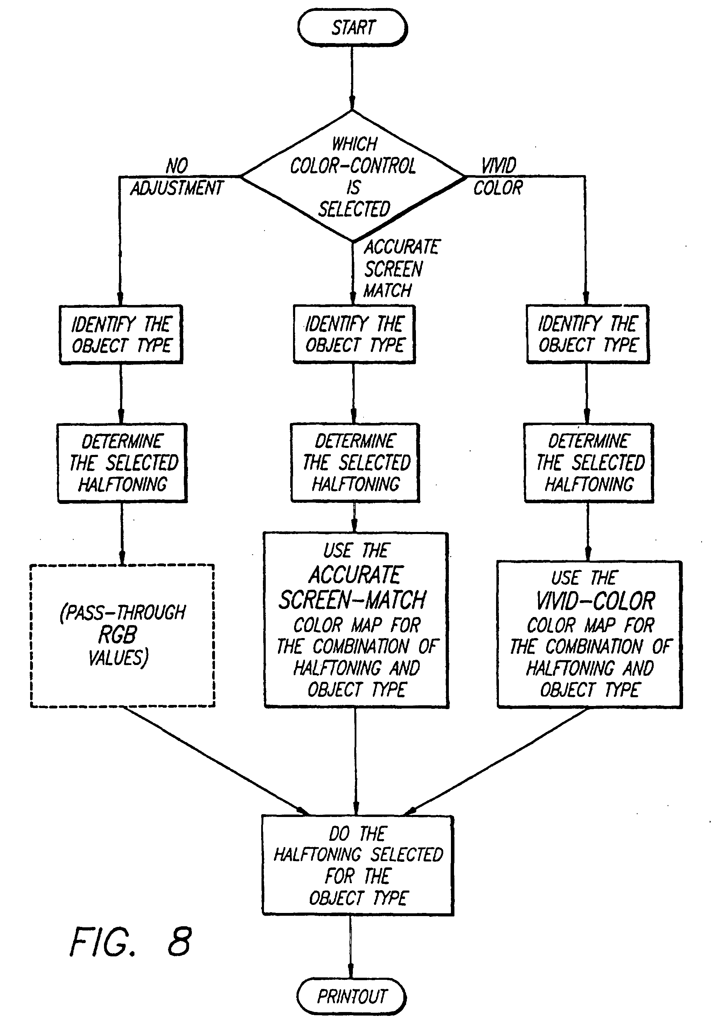

Figure 8 shows an embodiment of flow chart for adjusting the colour settings manually, in which case each adjustment is made in dependence upon the determined object type. The flow chart will be self-explanatory to the skilled person.

There are two possible implementations of "Scatter for Photos" 93, both already introduced above. One is the "HPL Noise with CV" dither 21 -- sometimes called simply "CV Noise" or "Special Dither". In the preferred embodiment this is the default, since it is fast and gives better output quality (when compared to cluster or pattern) for raster images. The other implementation is "CMYK Error Diffusion" 22, which as previously noted provides even better quality but with a significant degradation in speed.

The selection between the two is based on the user-interface Print Quality 65 mode setting. The High Quality 66 setting automatically selects CMYK Error Diffusion 22, whereas each of the Fast 68 and Normal 68 settings selects CV Noise 21.

The total number of color-correction lookup tables or "maps" needed is also represented in Tables 2 and 3. Eleven maps are needed for all the combinations of color-matching modes and halftoning methods. This is a significant increase in the number of maps provided as part of a color-printer driver, relative to the prior art.

As Fig. 9 shows, the input to the entire system is twenty-four-bit RGB, and the output is three-bit RGB sent to the printer. The steps involved are: choosing one of the color maps (HMS/Vivid, Accurate, or none) and mapping the color to another twenty-four-bit RG3 value -- and then going on to halftoning methods.

In the case of Noise Dither 21, preambles to halftoning are conversion 25 of the second twenty-four-bit RGB values to CV space, and some color processing 26in CV space; then the halftoning 27 is done in CV space. For Cluster 91, Pattern 92 and Error Diffusion 22, the preferred embodiment performs the halftoning in RGB space.

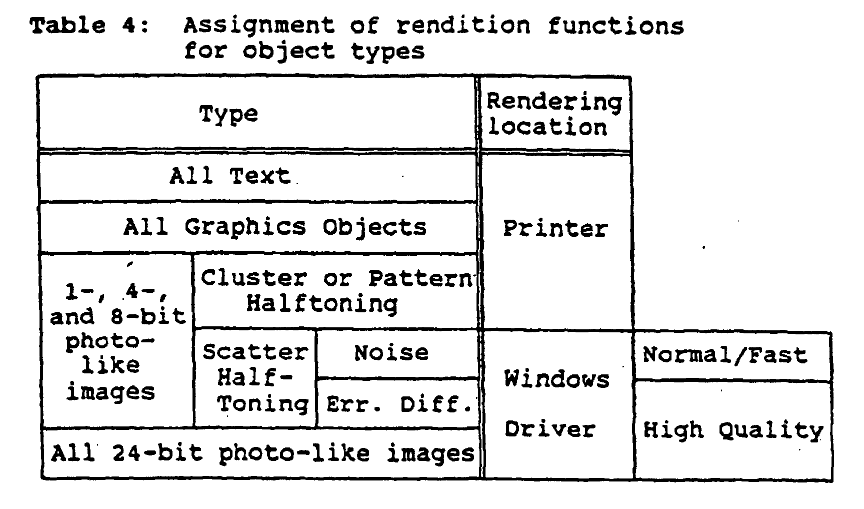

The color-matching portion of the color path is always done in the driver 32. The CV processing and halftoning 21-27, 91-93 are done either in the driver 32 or in the printer 56, depending on the type 41-43 of object being rendered.

Table 4 shows where objects of different types are rendered. All objects that are not already rendered in the application 31 (which is to say, most objects) are either rendered in the Windows driver or in the printer 56 firmware.

For objects that are to be rendered in the printer 56, color processing is first done in the driver 32 -- this encompasses the Color Matching 81, Lightness slider 96, and Lookup-Table (Pantone) Colors 97 settings. Then the object is sent from the Windows driver to the printer with associated twenty-four-bit final RGB values.

Based on the user's halftoning selections 90 in the user interface 80 -- or on the automatic halftoning invocations 93 etc. based on the user's mode selections 65-68 -- a command is also sent to the printer 56 to set the appropriate rendering mode 21/22/91/92 in the printer. The printer firmware 56 is then responsible for rendering all the objects and, in some cases, for scaling raster images.

As Table 4 indicates, the only objects that are rendered in the Windows driver are photograph-like images that use the Scatter halftoning 93, and all 24-bit photo-like images. The reason the Scatter halftoning 93 is rendered in the driver is that not all printers support the Scatter mode 93; and the only way to support both Error Diffusion 22 and Noise dither 21 on all printers is to provide them in the driver.

The twenty-four-bit images are rendered in the driver regardless of the halftoning mode in order to minimize the amount of data sent over the printer interface. Each twenty-four-bit RGB pixel is ordinarily halftoned down to three bits per pixel, which inherently provides an eight-to-one compression -- in addition to the printer-command-line compression on those three-bit pixels.

It will thus be appreciated from the foregoing description that many improvements can be provided.

In the past users have only had limited control in the selection of rendering options and color-correction options. That is, they have been limited to choosing one particular rendering option and/or one particular color-correction ootion for an entire document.

With the preferred embodiments, on one hand it is possible for a sophisticated user to select an independent rendering option and independent color-correction option for each type of object (e. g., text, business graphics. and photographic images). For example, in the printer-driver dialog screens shown in the drawings, a user can select a Scatter 93 halftone for photographic images, a Pattern 92 halftone for business graphics, and a Cluster 91 halftone for text.

In addition, color-correction options can be chosen for each object type independently of the halftoning method. This independent control of halftoning and color correction for each object gives the sophisticated user a multitude of options and thus very fine control of the quality and appearance of the printed output.

On the other hand, for hurried or unsophisticated users -- or those preparing material in which color quality is not crucial -- there is the ability to render and color-correct objects based on their respective types, with defaults and a minimum of decision-making (e. g., selection of "Fast" 68 and "Automatic Color" 62). Hence it is possible to preselect halftoning and color-correction options that are normally the best for each object type 41-43.

Thus there can be provided an automatic default that produces the best quality output for most users of a particular printer -- but also optional manual settings that can be changed by the more-demanding user.

Furthermore, as set forth earlier another printout quality feature is preferably automatically implemented as a default in the printer system. For example, in conceiving the preferred embodiment it was determined that users prefer a particular error-diffusion halftoning 22 over other kinds of dither halftoning.

This selection has been incorporated into (or, as phrased just above, automatically implemented as a default in) the print-quality print-mode options of the sort used by many manufacturers. Such print-mode options allow users to choose settings such as to optimize the printer technology itself for either faster output or higher-quality output.

It was discovered that this option could also be used to control an analogous kind of tradeoff within the printer driver itself, and in particular solved the problem of selecting -- with a minimum of human-user decisions and entry operations -- a halftoning method to use for certain complex objects such as photographic images. Thus, if the user chooses a print quality setting of "high quality" 66, the driver will perform CMYK error diffusion 22 to render all raster images (e. g., photograph-like images), while settings of "Normal" 67 or "Fast" 63 for the print mode will cause the driver 32 to perform noise dithering 21 on all raster images.

## Claims

1. A method of controlling the quality of printing a composite document (57) having objects (41-43) of different object types to be printed; said method comprising the steps of:
providing a plurality of different selectable print modes (66-68);
automatically distinguishing a plurality of different object types (41-43) any of which may be in such composite document, including distinguishing at least one particular given object (41) of a particular given one type;
providing a graphical user interface (65) enabling a user to designate one of a plurality of print modes (66-68) to be used in printing;
in response to the selection of a print mode, printing said one particular given object (41) of said particular given one type, by either:
invoking (12) a first print-rendering option (22) if said object (41) is to be printed in a first print mode (66);
alternatively invoking (11) a second print-rendering option (21) if said object (41) is to be printed in a second print mode (67, 68); and
then automatically rendering and printing, using whichever of said first (66) or second (67, 68) print modes whose designation (65) was developed in the designation-developing step, including rendering (21 or 22) and printing (18) said one particular given object (41) of said particular given one type using the corresponding first (22) or second (21) invoked rendering option, respectively.

2. A method according to claim 1, wherein the first print rendering option is invoked when a first print mode is designated and the second print rendering option is invoked when a second print mode is designated.

3. A method according to claim 2, wherein said first print mode is a high quality print mode, and said second print mode provides a higher print speed than said first print mode.

4. A method according to claim 1, 2 or 3, wherein said first and second print rendering options are invoked when the object is determined to be of photographic type.

5. A method according to any preceding claim, including the step of automatically invoking a third print rendering option when the object is determined to be other than of a photographic type; said third print rendering option including an error diffusion half-toning technique, said second print rendering option including a dither half-toning technique.

6. A method according to any preceding claim, wherein the print mode is selectable manually.

7. A printing system for printing a composite document (57) having a plurality of objects of different object types (41-43); said system comprising:
a colour printer (56, 110) for printing such a composite document (57) with a plurality of objects of different object types (41-43);
printer-control means (44) including a graphical user interface (60-99) operatively coupled to said printer (56, 110) providing a user the option of selecting (65) a print mode (66-68) from at least two different print modes (66-68) ; and
colour-management means (32), connected to said colour printer (56) and said printer-control means (44) for invoking (12, 11) different print-rendering options (22, 21) for an object of at least one certain object type (41) whenever one or the other of said at least two different print modes (66 or 67, 68), respectively, is selected from the graphical user interface.

8. A printing system according to claim 7, wherein said colour management means is operative to invoke automatically said print rendering options.

9. A printing system according to claim 7 or 8, wherein said first print rendering option includes an error diffusion technique and said second print rendering option includes a dither technique.

10. A printing system according to any one of claims 7 to 9, wherein said first and second print rendering options are half-toning techniques for printing objects of photographic type.

## Patentansprüche

1. Ein Verfahren zum Steuern der Qualität des Druckens eines zusammengesetzten Dokuments (57), das Objekte (41-43) verschiedener Objekttypen aufweist, die gedruckt werden sollen; wobei das Verfahren folgende Schritte aufweist:
Bereitstellen einer Mehrzahl von verschiedenen auswählbaren Druckmoden (66-68) ;
automatisches Unterscheiden einer Mehrzahl von verschiedenen Objekttypen (41-43), von denen jeder in einem solchen zusammengesetzten Dokument vorliegen kann, einschließlich des Unterscheidens mindestens eines bestimmten gegebenen Objekts (41) eines bestimmten gegebenen Typs;
Bereitstellen einer graphischen Benutzerschnittstelle (65), die einen Benutzer befähigt, einen einer Mehrzahl von Druckmoden (66-68), der beim Drucken verwendet werden soll, zu benennen;
als Antwort auf die Auswahl eines Druckmodus, Drucken des einen bestimmten gegebenen Objekts (41) des bestimmten gegebenen einen Typs entweder durch:
Aufrufen (12) einer ersten Druckaufbereitungsoption (22), falls das Objekt (41) in einem ersten Druckmodus (66) gedruckt werden soll;
alternativ dazu, Aufrufen (11) einer zweiten Druckaufbereitungsoption (21), falls das Objekt (41) in einem zweiten Druckmodus (67, 68) gedruckt werden soll; und
anschließendes automatisches Aufbereiten und Drucken unter Verwendung des ersten (66) oder zweiten (67, 68) Druckmodus, je nach dem, wessen Benennung (65) in dem Benennungsentwicklungsschritt entwickelt wurde, einschließlich eines Aufbereitens (21 oder 22) und Drukkens (18) des einen bestimmten gegebenen Objekts (41) des bestimmten gegebenen einen Typs unter Verwendung der entsprechenden ersten (22) oder zweiten (21) aufgerufenen Aufbereitungsoptionen.

2. Ein Verfahren gemäß Anspruch 1, bei dem die erste Druckaufbereitungsoption aufgerufen wird, wenn ein erster Druckmodus benannt wird, und die zweite Druckaufbereitungsoption aufgerufen wird, wenn ein zweiter Druckmodus benannt wird.

3. Ein Verfahren gemäß Anspruch 2, bei dem der erste Druckmodus ein Hochqualitätsdruckmodus ist und der zweite Druckmodus eine höhere Druckgeschwindigkeit als der erste Druckmodus liefert.

4. Ein Verfahren gemäß Anspruch 1, 2 oder 3, bei dem die erste und die zweite Druckaufbereitungsoption aufgerufen werden, wenn bestimmt wird, daß das Objekt ein photographischer Typ ist.

5. Ein Verfahren gemäß einem der vorhergehenden Ansprüche, das den Schritt eines automatischen Aufrufens einer dritten Druckaufbereitungsoption umfaßt, wenn bestimmt wird, daß das Objekt ein anderer als ein photographischer Typ ist; wobei die dritte Druckaufbereitungsoption eine Fehlerdiffusionshalbgebungstechnik umfaßt und wobei die zweite Druckaufbereitungsoption eine Zitterhalbtongebungstechnik umfaßt.

6. Ein Verfahren gemäß einem der vorhergehenden Ansprüche, bei dem der Druckmodus manuell auswählbar ist.

7. Ein Drucksystem zum Drucken eines zusammengesetzten Dokuments (57), das eine Mehrzahl von Objekten verschiedener Objekttypen (41-43) aufweist; wobei das System folgende Merkmale aufweist:
einen Farbdrucker (56, 110) zum Drucken eines solchen zusammengesetzten Dokuments (57) mit einer Mehrzahl von Objekten unterschiedlicher Objekttypen (41-43);
eine Druckersteuereinrichtung (44), die eine graphische Benutzerschnittstelle (60-99) umfaßt, die funktionell mit dem Drucker (56, 110) gekoppelt ist und einem Benutzer die Option des Auswählens (65) eines Druckmodus (66-68) von mindestens zwei verschiedenen Druckmoden (66-68) liefert; und
eine Farbsteuereinrichtung (32), die mit dem Farbdrukker (56) und der Druckersteuereinrichtung (44) verbunden ist, um verschiedene Druckaufbereitungsoptionen (21, 22) für ein Objekt von mindestens einem bestimmten Objekttyp (41) immer dann aufzurufen, wenn einer oder der andere der mindestens zwei verschiedenen Druckmoden (66 oder 67, 68) von der graphischen Benutzerschnittstelle ausgewählt wird.

8. Ein Drucksystem gemäß Anspruch 7, bei dem die Farbsteuereinrichtung wirksam ist, um die Druckaufbereitungsoptionen automatisch aufzurufen.

9. Ein Drucksystem gemäß Anspruch 7 oder 8, bei dem die erste Druckaufbereitungsoption eine Fehlerdiffusionstechnik und die zweite Druckaufbereitungsoption eine Zittertechnik umfaßt.

10. Ein Drucksystem gemäß einem der Ansprüche 7 bis 9, bei dem die erste und die zweite Druckaufbereitungsoption Halbtongebungstechniken zum Drucken von Objekten eines photographischen Typs sind.

## Revendications

1. Procédé de commande de la qualité d'impression d'un document composite (57) comportant des objets (41 à 43) de différents types d'objets à imprimer ; ledit procédé comprenant les étapes consistant à :
procurer une pluralité de modes d'impression différents sélectionnables (66 à 68) ;
distinguer automatiquement une pluralité des différents types d'objets (41 à 43) dont l'un quelconque peut être dans un tel document composite, incluant la distinction d'au moins un objet particulier (41) d'un type donné particulier ;
procurer une interface utilisateur graphique (65) permettant à l'utilisateur de désigner un mode parmi une pluralité de modes d'impression (66 à 68) à utiliser dans l'impression ;
en réponse à la sélection d'un mode d'impression, imprimer ledit objet donné particulier (41) dudit type donné particulier par soit :
appeler (12) une première option de rendu d'impression (22) si ledit objet (41) qui doit être imprimé doit être imprimé dans un premier mode d'impression (66) ;
appeler (11) alternativement une seconde option de rendu d'impression (21) si ledit objet (41) doit être imprimé dans un second mode d'impression (67, 68) ; et
ensuite rendre et imprimer automatiquement, en utilisant l'un quelconque dudit premier (66) ou dudit second (67, 68) modes d'impression dont la désignation (65) a été développée dans l'étape de développement de désignation, incluant le rendu (21 ou 22) et l'impression (18) dudit objet donné particulier (41) dudit type donné particulier en utilisant les premières (22) ou secondes (21) options de rendu appelées correspondantes, respectivement.

2. Procédé selon la revendication 1, dans lequel la première option de rendu d'impression est appelée lorsqu'un premier mode d'impression est désigné et la second option de rendu d'impression est appelée lorsqu'un second mode d'impression est désigné.

3. Procédé selon la revendication 2, dans lequel ledit premier mode d'impression est un mode d'impression de haute qualité, et ledit second mode d'impression procure une vitesse d'impression plus élevée que ledit premier mode d'impression.

4. Procédé selon la revendication 1, 2 ou 3, dans lequel lesdites première et seconde options de rendu d'impression sont appelées lorsque l'objet est déterminé être du type photographique.

5. Procédé selon l'une quelconque des revendications précédentes, incluant l'étape consistant à appeler automatiquement une troisième option de rendu d'impression lorsqu'un objet est déterminé être autre que du type photographique ; ladite troisième option de rendu d'impression incluant une technique de tramage par diffusion d'erreur, ladite seconde option de rendu d'impression incluant une technique de tramage par juxtaposition.

6. Procédé selon l'une quelconque des revendications précédentes, dans lequel ledit mode d'impression est sélectionnable manuellement.

7. Système d'impression pour imprimer un document composite (57) comportant une pluralité d'objets de différents types d'objets (41 à 43) ; ledit système comprenant :
une imprimante couleur (56, 110) pour imprimer un tel document composite (57) avec une pluralité d'objets des différents types d'objets (41 à 43) ;
un moyen de commande d'imprimante (44) incluant une interface utilisateur graphique (60 à 99) couplée fonctionnellement à ladite imprimante (56, 110) procurant à l'utilisateur l'option de sélectionner (65) un mode d'impression (66 à 68) parmi au moins deux modes d'impression différents (66 à 68) ; et
un moyen de gestion de couleurs (32), connecté à ladite imprimante couleur (56) et audit moyen de commande d'imprimante (44) pour appeler (12, 11) différentes options de rendu d'impression (22, 21) pour un objet d'au moins un certain type d'objet (41) chaque fois que un ou l'autre desdits au moins deux modes d'impression différents (66 ou 67, 68), respectivement, est sélectionné à partir de l'interface utilisateur graphique.

8. Système d'impression selon la revendication 7, dans lequel ledit moyen de gestion de couleur est fonctionnel pour appeler automatiquement lesdites options de rendu d'impression.

9. Système d'impression selon la revendication 7 ou 8, dans lequel ladite première option de rendu d'impression inclut une technique de diffusion d'erreur et ladite seconde option de rendu d'impression inclut une technique de juxtaposition.

10. Système d'impression selon l'une quelconque des revendications 7 à 9, dans lequel les première et seconde options de rendu d'impression sont des techniques de tramage pour imprimer des objets du type photographique.
